# EUROPÄISCHE PATENTSCHRIFT

(11) **EP 0 685 403 B1**
(45) Veröffentlichungstag und Bekanntmachung des Hinweises auf die Patenterteilung: **06.08.1997**
(21) Anmeldenummer: 95107366.7
(22) Anmeldetag: 16.05.1995
(51) Int. Cl.: B65D 6/18, F16B 5/06

(54) **Verbindungsanordnung**
Connecting arrangement
Dispositif de connection

(30) Priorität: 03.06.1994 DE 4419371
(43) Veröffentlichungstag der Anmeldung: 06.12.1995
(73) Patentinhaber: Krupp Kautex Maschinenbau GmbH, 53229 Bonn (DE)
(72) Erfinder: Grönnevik, Oddbjörn, N-1360 Nesbru (NO)
(74) Vertreter: Koepsell, Helmut, Dipl.-Ing.

(56) Entgegenhaltungen:
- DE-A- 3 121 565
- DE-U- 9 308 051

## Beschreibung

Die Erfindung betrifft eine Einrichtung zum Verbinden zweier Teile.

Aus dem DE-U-93 08 051.4 ist ein Behälter mit relativ zu dessen Boden verschwenkbarem Seitenwandteilen bekannt, die mit Verbindungseinrichtungen versehen sind, um die Seitenwandteile in ihrer wirksamen Lage miteinander zu verbinden und in dieser Lage zu sichern. Das eine Seitenwandteil ist dazu stirnseitig mit wenigstens einem Fortsatz versehen, der zur Herstellung der Verbindung in eine Durchbrechung am anderen Seitenwandteil eingreift. Innerhalb der Durchbrechung ist dabei ein im wesentlichen in der Hauptebene der Durchbrechung sich erstreckender Vorsprung angeordnet, der in der wirksamen Lage der Teile in eine am Fortsatz des anderen Teiles befindliche Öffnung eingreift. Auf diese Weise wird eine formschlüssige Verbindung zwischen den beiden miteinander zu verbindenden Teilen bewirkt. Um ein ungewolltes Lösen der Verbindung zwischen den beiden Teilen zu verhindern, ist bei dem bekannten Behälter ferner zwischen den Seitenwandteilen und/oder zwischen diesen und dem Boden eine Feststellvorrichtung angeordnet, die eine Vorspannkraft ausübt, die in einer die Verbindung aufrechterhaltenden Richtung wirksam ist. Zur Herstellung der Verbindung zwischen den Seitenwandteilen dieses bekannten Behälters ist es erforderlich, die zusammenwirkenden Verbindungselemente elastisch zu verformen. Dies erfordert ein gewisses Geschick. Außerdem ist auch ein gewisser Kraftaufwand erforderlich, um die elastischen Verformungen zu bewirken. Ferner besteht bei Einwirkung äußerer Kräfte auf den Behälter, beispielsweise beim Transport desselben, die Gefahr, daß die die Verbindung aufrechterhaltenden Vorspannkräfte überwunden werden und sich somit die Verbindung ungewollt löst.

Der Erfindung liegt die Aufgabe zugrunde, eine Verbindungsanordnung gemäß dem Oberbegriff des Anspruches 1 so auszuführen, daß die Nachteile bekannter Verbindungsanordnungen vermieden werden. So sollen zum Verbinden der beiden Teile nur wenige Relativbewegungen zwischen den beiden Teilen erforderlich sind, wobei die Positionierung der zusammenwirkenden Verbindungselemente zur Herstellung eines Formschlusses mehr oder weniger selbsttätig erfolgt, jedenfalls ohne die Notwendigkeit von besondere Krafteinwirkungen erfordernden Verformungen der Verbindungselemente, um diese miteinander in Eingriff zu bringen. Der Formschluß soll andererseits nicht durch einfaches Umbiegen bestimmter Bereiche wenigstens eines der Verbindungselemente erreicht werden. Trotzdem soll die Verbindung im Bedarfsfall ohne große Schwierigkeiten lösbar sein.

Diese Aufgabe wird unter Anwendung der Merkmale im Kennzeichen des Anspruches 1 gelöst.

Im Ergebnis erfordert das Herstellen der Verbindung lediglich zwei Relativbewegungen zwischen den beiden miteinander zu verbindenden Teilen. Im Verlauf der ersten Relativbewegung wird der Fortsatz des ersten Teiles in die Ausnehmung des zweiten Teiles eingesteckt. Bei der darauffolgenden Querbewegung erfolgt die Herstellung des Formschlusses zwischen beiden Teilen, wobei gleichzeitig auch die Verriegelung der zusammenwirkenden Verbindungselemente durch die Arretierlasche bewirkt wird, die im Zuge der zweiten Relativbewegung in ihre wirksame Lage verschwenkt wird. Dabei ist es nicht erforderlich, daß die zusammenwirkenden Teile oder Elemente merkliche Beanspruchungen durch Zug, Druck, Biegung oder Torsion erfahren. Das Ausmaß jeder der beiden Bewegungen zur Herstellung der Verbindung kann sehr gering sein, beispielsweise in der Größenordnung einiger Zentimeter liegen. Es sind auch nach Herstellung der Verbindung keine ins Gewicht fallenden zusätzlichen Kräfte erforderlich, um die Verbindung aufrechtzuerhalten.

Weitere Einzelheiten der Erfindung ergeben sich aus der folgenden Beschreibung sowie den Unteransprüchen.

In der Zeichnung sind zwei Ausführungsbeispiele der Erfindung dargestellt. Es zeigen:
- Fig. 1: zwei miteinander zu verbindende Teil, die sich vor Herstellung der Verbindung in einem Abstand voneinander befinden, in perspektivischer Ansicht,
- Fig. 2: eine der Fig. 1 entsprechende Darstellung der beiden Teile nach Herstellung der Verbindung,
- Fig. 3: einen Schnitt nach der Linie III-III der Fig. 1,
- Fig. 4: eine der Fig. 3 entsprechende Darstellung, wobei jedoch die beiden miteinander zu verbindenden Teile im Zuge der Herstellung der Verbindung eine erste Zwischenposition einnehmen,
- Fig. 5: eine der Fig. 4 entsprechende Darstellung, wobei die beiden Teile im Zuge der Herstellung der Verbindung eine zweite Zwischenposition einnehmen,
- Fig. 6: die beiden Teile in der Verbindungsposition gemäß dem Schnitt VI-VI der Fig. 2,
- Fig. 7: eine der Fig. 1 entsprechende Darstellung einer zweiten Ausführungsform,
- Fig. 8: einen Schnitt nach der Linie VIII-VIII der Fig. 7,
- Fig. 9: eine der Fig. 8 entsprechende Darstellung, wobei jedoch die beiden miteinander zu verbindenden Teile im Zuge der Herstellung der Verbindung eine erste Zwischenposition einnehmen,
- Fig. 10: eine der Fig. 9 entsprechende Darstellung, wobei die beiden Teile im Zuge der Herstellung der Verbindung eine zweite Zwischenposition einnehmen,
- Fig. 11: die beiden Teile in der Verbindungsposition.

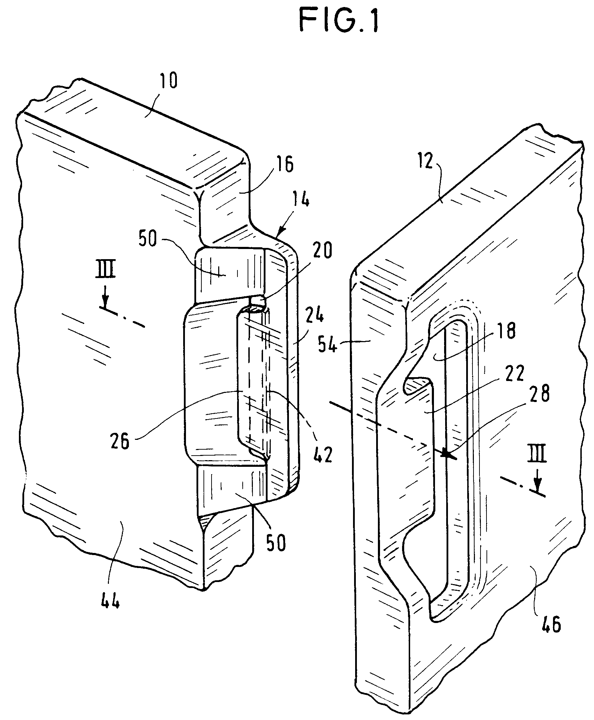

Bei den beiden miteinander zu verbindenden Teilen 10, 12 des Ausführungsbeispiels gemäß den Fig. 1 - 6 kann es sich beispielsweise um die Seitenwandteile eines boxartigen Behälters, einer Schublade oder eines ähnlichen Körpers handeln, der auch mit einem Boden versehen sein kann. Letzterer ist in der Zeichnung nicht dargestellt. Die beiden Teile 10 und 12 können aber auch Bestandteile eines Möbelstückes, eines Behältnisses für Akten oder irgendeiner anderen Einrichtung sein.

In allen Fällen ist das erste Teil 10 mit einem Fortsatz 14 versehen, der stirnseitig angebracht sein und die Stirnfläche 16 des ersten Teils 10 in Richtung auf das zweite Teil 12 überragen kann. Das zweite Teil 12 ist an seinem in der Verbindungsposition beider Teile dem ersten Teil 10 zugekehrten Endbereich mit einer Ausnehmung 18 versehen, deren Größe und Form in noch zu beschreibender Weise an die des Fortsatzes 14 des ersten Teiles 10 angepaßt sind.

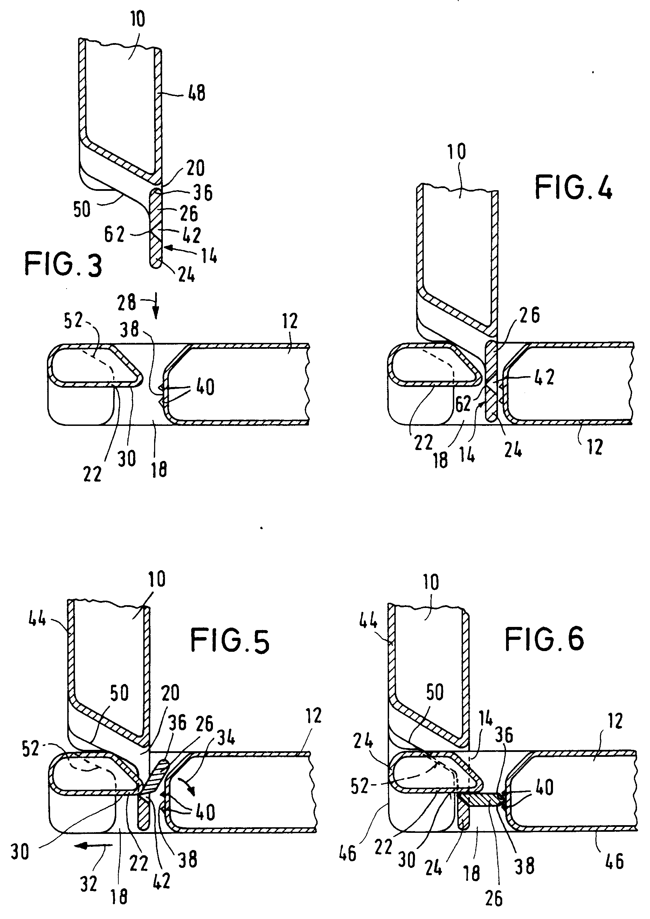

Der Fortsatz 14 des ersten Teiles 10 ist mit einer Durchbrechung 20 versehen, so daß der Fortsatz 14 etwa die Form etwa eines Bügels aufweist. An der die Ausnehmung 18 begrenzenden Wandung des zweiten Teiles 12 ist ein Vorsprung 22 angebracht, der in die Ausnehmung 18 hineinragt und bezüglich Anordnung und Größe so an die Durchbrechung 20 im Fortsatz 14 angepaßt ist, daß er in diese eingeführt werden kann. An der äußeren stegförmigen Begrenzung 24 der Durchbrechung 20 ist innenseitig eine Arretierlasche 26 derart angebracht, daß sie gegenüber der äußeren stegförmigen Begrenzung 24 aus der in den Fig. 1, 3 und 4 dargestellten Ausgangslage, in welcher sie im wesentlichen in einer durch die äußere stegförmige Begrenzung 24 definierten Ebene oder einer dazu parallelen Ebene verläuft, verschwenkbar ist. In dem in den Fig. 1 - 6 dargestellten Ausführungsbeispiel liegt die Arretierlasche 26 in ihrer Ausgangsposition in der Ebene des bügelförmigen Fortsatzes 14, wie dies insbesondere die Fig. 3 und 4 erkennen lassen.

Zur Herstellung der Verbindung zwischen den beiden Teilen 10 und 12 wird das erste Teil 10 in Richtung des Pfeiles 28 aus der Position gemäß Fig. 1 und 3 relativ zunächst in eine erste Zwischenposition gemäß Fig. 4 verschoben, in welcher der Fortsatz 14 sich in der Ausnehmung 18 befindet derart, daß die Arretierlasche 26 gegenüber dem Vorsprung 22 angeordnet ist. Letzterer ist, wie insbesondere die Fig. 3 - 6 erkennen lassen, an seiner der Ausnehmung 18 zugekehrten Seite im Querschnitt etwa keilförmig begrenzt, wobei die dem ersten Wandteil 10 abgekehrte Begrenzungsfläche 30 im Bereich der Ausnehmung 18 im wesentlichen senkrecht zur Richtung 28 verläuft.

Nachdem die Teile 10 und 11 im Zuge der Herstellung der Verbindung die in Fig. 4 dargestellte Position erreicht haben, wird das Teil 10 gegenüber dem Teil 12 relativ in Richtung des Pfeiles 32 verschoben. Fig. 5 zeigt eine Zwischenposition im Zuge dieser Verschiebung, wobei erkennbar ist, daß der Vorsprung 22 an der Arretierlasche 26 zur Anlage kommt und letztere etwa in Richtung des Pfeiles 34 verschwenkt derart, daß sie am Ende der Bewegung in Richtung des Pfeiles 32 die in Fig. 6 dargestellte Position einnimmt, in welcher die Arretierlasche 26 etwa senkrecht zu ihrer in den Fig. 3 und 4 dargestellten Ausgangsposition verläuft und mit ihrem freien Rand 36 an der dem Vorsprung 22 gegenüberliegenden Bereich 38 der die Ausnehmung 18 begrenzenden Wandung zur Anlage kommt. Dieser Wandbereich 38 ist mit einem Sitz in Form von wenigstens zwei Rastvorsprüngen 40 versehen, deren Abstand etwa der Breite der Arretierlasche 26 im Bereich ihres freien Randes 36 entspricht.

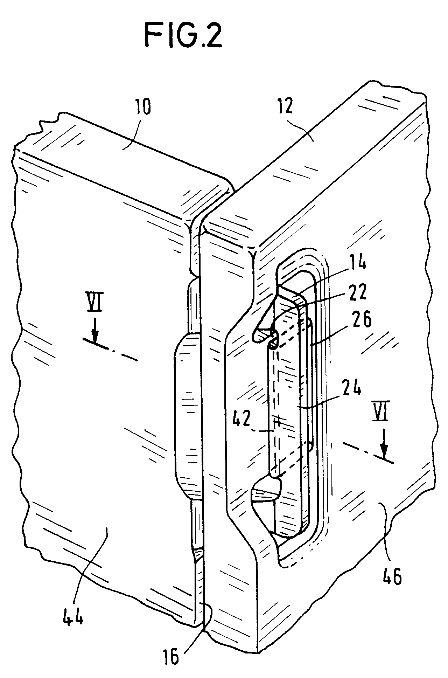

In der in den Fig. 2 und 6 dargestellten Verbindungsposition beider Teile hintergreift die äußere stegförmige Begrenzung 24 des Fortsatzes 14 den Vorsprung 22 innerhalb der Ausnehmung 18, so daß zwischen dieser stegförmigen Begrenzung 24 und damit dem Teil 10 einerseits und dem Vorsprung 22 des zweiten Teiles 12 andererseits ein Formschluß entsteht. Dieser könnte nur gelöst werden, wenn das erste Teil 10 entgegen der Richtung des Pfeiles 32 relativ zum zweiten Teil 12 verschoben wird, um den äußeren stegförmigen Bereich 24 außer Eingriff mit dem Vorsprung 22 zu bringen. Eine derartige Bewegung wird jedoch durch die in ihre wirksame Position gemäß Fig. 6 verschwenkte Arretierlasche 26 verhindert, die an der inneren Begrenzungswandung 38 der Ausnehmung 18 anliegt und somit den Fortsatz 14 des ersten Teiles 10 gegen die innere Begrenzung der Ausnehmung 18 drückt. Die Arretierlasche 26 bildet somit in ihrer wirksamen Position gemäß Fig. 6 eine Arretierung, die zugleich auch dazu dienen kann, eine feste Anlage beider Teile aneinander, bei der im Verbindungsbereich kein Spiel zwischen beiden Teilen 10 bzw. 123 besteht, zu gewährleisten. Dazu trägt auch die Tatsache bei, daß in der Verbindungslage beider Teile die Arretierlasche 26 an der Begrenzungsfläche 30 des Vorsprungs 22 anliegt, wodurch eine gewisse Verspannung zwischen beiden Teilen erreicht wird. Dies gilt insbesondere dann, wenn die hier zusammenwirkenden Teile aus Kunststoff, insbesondere einem thermoplastischen Kunststoff hergestellt sind, der ohnehin eine gewissse elastische Verformbarkeit aufweist.

Um das Umklappen der Arretierlasche 26 aus der Position gemaß den Fig. 1, 3 und 4 in die gemäß Fig. 2 und 6 zu erleichtern, ist die Arretierlasche 26 lediglich über einen dünnen Materialfilm 62, der durch eine Kerbe 42 gebildet wird, mit dem äußeren stegförmigen Bereich 24 des Fortsatzes 14 verbunden, so daß, wie insbesondere die Fig. 4 - 6 deutlich erkennen lassen, das Verschwenken der Arretierlasche 26 keine besonders große Kraft erfordert. Die Kerbe 42, die das Umklappen der Arretierlasche 26 erleichtert, schließt vorzugsweise einen Winkel von 90° ein. Die schrägen Begrenzungswandungen der Kerbe 42 bilden einen Anschlag, der verhindert, daß bei Einwirkung üblicher Kräfte die Arretierlasche 26 über ihre wirksame Position gemäß Fig. 6 hinaus in Richtung des Pfeiles 34 (Fig. 5) verschwenkt wird. Durch Wahl des von der Kerbe gebildeten bzw. eingeschlossenen Winkels kann somit auch die wirksame Position der Arretierlasche festgelegt werden.

Die Wanddicke des Fortsatzes 14 muß an die Breite der Ausnehmung 18 angepaßt und demzufolge so bemessen sein, daß er zwischen Fortsatz 22 und dem Bereich 38 der gegenüberliegenden Wandung hindurchgeführt werden kann. Dazu kann der Fortsatz 14 eine geringere Dicke aufweisen als das eigentliche Teil 10. Da in der Verbindungsposition der Teile 10 und 12 die Position des Fortsatzes 14 die Position des Teiles 10 relativ zum Teil 12 festlegt, kann es zweckmäßig sein, den Fortsatz 14 so am Teil 10 bzw. dessen Stirnfläche anzubringen, daß in der Verbindungsposition beider Teile diese eine bestimmte Lage einnehmen, beispielsweise derart, daß, wie in den Fig. 2 und 6 dargestellt, die beiden Teile 10 und 12 außenseitig und ggf. auch innenseitig von glatten Flächen begrenzt sind, über die keine Vorsprünge hinausragen. So kann z. B. die äußere seitliche Begrenzungsfläche 44 des ersten Teiles 10 in der Verbindungsposition bündig mit der Stirnfläche 46 des zweiten Teiles 12 abschließen. Ferner ist dabei die Länge des Fortsatzes 14 so gewählt, daß dieser in der Verbindungslage gemäß den Fig. 2 und 6 nicht über die äußere seitliche Begrenzungsfläche 46 hinausragt.

Beim Ausführungsbeispiel gemäß den Fig. 1 bis 6 fluchtet der Fortsatz 14 mit der inneren Begrenzungsfläche 48 des ersten Teiles 10. Der Übergang zwischen dem Fortsatz 14 und der äußeren Begrenzungsfläche 44 erfolgt über Schrägflächen 50, die in der Verbindungslage der Teile 10 und 12 an entsprechend geneigten Schrägflächen 52 des die Ausnehmung 18 begrenzenden Wandteiles 54 anliegen können und somit ebenfalls zur Bildung einer guten, im wesentlichen spielfreien Verbindung zwischen beiden Teilen 10 und 12 beitragen.

Es war bereits erwähnt worden, daß in der Verbindungsposition gemäß den Fig. 2 und 6 der Fortsatz 14 des ersten Teiles 10 nicht über die äußere Seitenwandung 46 des zweiten Teiles 12 hinausragt. Um dies zu erreichen, ist der Vorsprung 22 so innerhalb der Ausnehmung 18 angeordnet, daß seine zur Herstellung des Formschlusses zwischen den Teilen 10 und 12 mit der äußeren stegförmigen Begrenzung 24 des Fortsatzes 14 zusammenwirkende Begrenzungsfläche 30 gegenüber der äußeren seitlichen Wandung 46 des zweiten Teiles 12 nach innen versetzt angeordnet ist. Dies kann in einfacher Weise dadurch erreicht werden, daß, wie dies insbesondere die Fig. 1 und 2 erkennen lassen, der den Vorsprung 22 tragende äußere Bereich der Begrenzung der Ausnehmung 18 dünner ausgebildet ist als das Teil 12 und dabei über die Schrägflächen 50 nach innen, also in Richtung auf das erste Teil 10 versetzt angeordnet ist.

In Abhängigkeit von den verwendeten Werkstoffen und auch den Dimensionen der zusammenwirkenden Elemente, insbesondere der Arretierlasche 26 und der Rastvorsprünge 40, kann die Verbindung zwischen beiden Teilen 10 und 12 wieder gelöst werden, indem die Arretierlasche 26 aus der Position gemäß Fig. 6 z. B. mittels eines Werkzeuges unter Überwindung der jeweils einer solchen Bewegung entgegenwirkenden Rastvorsprünge oder dgl. wieder in die Lage gemäß Fig. 5 oder 6 verschwenkt wird, worauf das Teil 10 entgegen der Richtung des Pfeiles 32 relativ zum Teil 12 aus der formschlüssigen Verbindung mit letzterem gebracht werden kann. Eine solche lösbare Verbindung kann beispielsweise bei einem boxartigen Behälter zweckmäßig sein, dessen Seitenwandteile bei leerem Behälter in eine Position verschwenkbar sind, in welcher sie mit dem Boden des Behälters fluchten. Andererseits ist die Verbindung bei Wahl entsprechender Werkstoffe und bei entsprechender Dimensionierung der zusammenwirkenden Elemente so gut, daß sie auch in solchen Fällen angewendet werden kann, in denen ein Lösen der Verbindung weder vorgesehen noch erforderlich ist. In jedem Fall ist das Herstellen der Verbindung außerordentlich einfach, da dazu lediglich zwei Bewegungen der miteinander zu verbindenden Teile, nämlich die in Richtung des Pfeiles 28 und jene quer dazu in Richtung des Pfeiles 32, erforderlich sind, wobei dann ggf. nur noch die Position der Arretierlasche 26 überprüft und ggf. korrigiert zu werden braucht. Vorteilhaft ist ferner, daß insbesondere bei Herstellung der Teile einschließlich der Verbindungselemente aus Kunststoff diese im allgemeinen in einem Arbeitsgang gefertigt werden können.

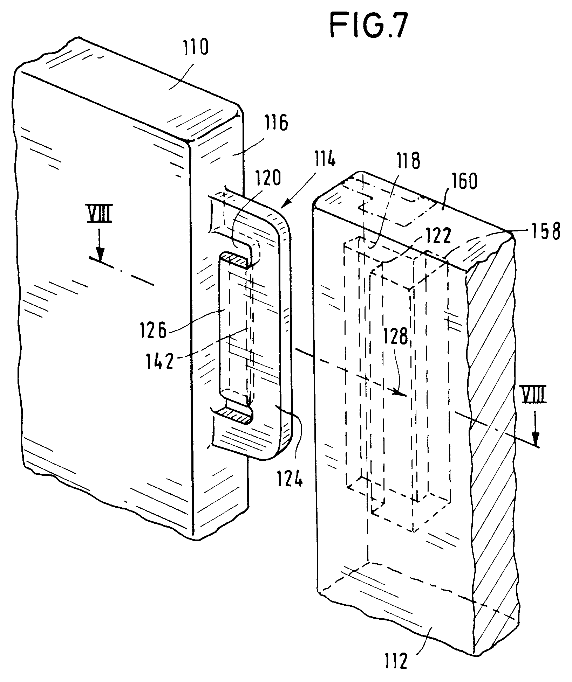

Die vorgenannten Vorteile gelten auch für die Verbindungsanordnung gemäß dem Ausführungsbeispiel der Fig. 7 - 11, das in wesentlichen Teilen mit dem der Fig. 1 - 6 übereinstimmt, so daß gleiche Teile auch mit gleichen Bezugszeichen versehen sind, die jedoch beim zweiten Ausführungsbeispiel um 100 höher sind. Der wesentliche Unterschied zwischen beiden Ausführungsbeispielen besteht darin, daß die Verbindungsanordnung gemaß den Fig. 7 - 11 zur Herstellung einer Verbindung zwischen zwei Teilen 110, 112 dient, die im wesentlichen in derselben Richtung verlaufen, ggf. auch miteinander fluchten. Dies hat zur Folge, daß die Ausnehmung 118 am zweiten Teil 112 zur Aufnahme des Fortsatzes 114 des ersten Teiles 110 an der Stirnseite 156 des zweiten Teils 112 angebracht ist, wohingegen die entsprechende Ausnehmung 18 des zweiten Teiles 12 beim ersten Ausführunggsbeispiel im wesentlichen quer zur Längserstreckung des zweiten Teiles 12 zu diesem verläuft. Der Vorsprung 122, der gemeinsam mit dem Fortsatz 114 bzw. der äußeren stegförmigen Begrenzung desselben in der Verbindungsposition beider Teile 110, 112 den Formschluß bewirkt, erstreckt sich demzufolge quer zum Längsverlauf des zweiten Teiles 112. Somit erfolgt auch die Relativbewegung zwischen den Teilen 110 und 112 in Richtung des Pfeiles 128, durch welche der Fortsatz 114 relativ in die Ausnehmung 118 eingeführt wird, im wesentlichen parallel zum Längsverlauf des zweiten Teiles 112, wenn dieses einen im wesentlichen linearen Verlauf aufweist. Allerdings ist dies weder beim ersten Teil 110 noch beim zweiten Teil 112 erforderlich. Entsprechendes gilt auch für die Teile 10, 12 des ersten Ausführungsbeispiels.

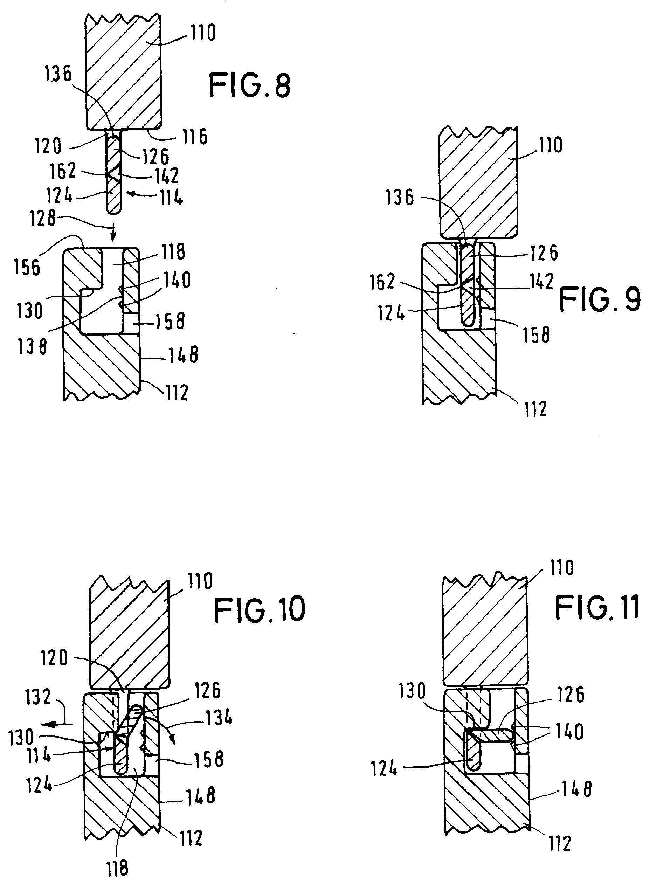

Die in den Fig. 8 - 11 dargestellte Handhabung bei der Herstellung der Verbindung entspricht im wesentlichen der der Fig. 3 - 6. D.h., daß zunächst das erste Teil 110 in Richtung des Pfeiles 128 relativ in die Ausnehmung 118 des zweiten Teiles 112 hineinbewegt wird, bis es die Position gemäß Fig. 9 erreicht hat. Alsdann erfolgt eine Querverschiebung des ersten Teiles 110 relativ zum zweiten Teil 112 in Richtung des Pfeiles 132, in deren Verlauf die Arretierlasche 126 durch den Vorsprung 122, der auch als Verengung der Ausnehmung 118 aufgefaßt werden kann, beaufschlagt und über die in Fig. 10 dargestellte Zwischenposition in die Endposition gemäß Fig. 11 verschwenkt wird, in welcher die Arretierlasche 126 sich mit ihrem freien Rand 136 an der die Ausnehmung 118 begrenzenden Wandung 138 abstützt und so den Fortsatz 114 und damit das erste Teil 110 am zweiten Teil 112 verriegelt.

Die Anordnung des Fortsatzes 114 an der Stirnfläche 116 des ersten Teiles 110 wird durch die Lage der Ausnehmung 118 am zweiten Teil 112, das Ausmaß der relativen Querverschiebung in Richtung des Pfeiles 132 und die Endposition des ersten Teiles 110 relativ zum zweiten Teil 112 bestimmt. Bei dem in den Fig. 7 - 11 dargestellten Ausführungsbeispiel fluchten die beiden Teile 110, 112 in ihrer Verbindungsposition. Dies ist jedoch nicht in jedem Fall erforderlich.

Die Ausnehmung 118 setzt sich in eine seitliche Öffnung 158 der seitlichen Begrenzungsfläche 148 des zweiten Teiles 112 fort. Dies kann herstellungsbedingt sein. Andererseits ist eine derartige Öffnung 158 zweckmäßig, um ggf. die in ihre wirksame Lage gemäß Fig. 11 verschwenkte Arretierlasche 126 zugänglich zu machen, so daß diese ggf. wieder entgegen der Schwenkrichtung 134 aus ihrer Arretierposition bewegt werden kann. Dies wird, da die Arretierlasche 126 in ihrer Arretierposition normalerweise an der Begrenzungsfläche 130 des Vorsprunges 122 anliegt, zunächst nur bei einer gleichzeitigen elastischen Verformung der Arretierlasche 126 möglich sein. Jedoch würde, sobald die Arretierlasche 126 etwas gelockert ist, durch entsprechende Bewegung beider Teile 110 und 112 - bzw. 10, 12 beim Ausführungsbeispiel gemäß den Figuren 1-6 - die Verbindung vollständig gelöst werden können. Die seitliche Öffnung 158 kann aber auch im Bedarfsfall dazu dienen, die Arretierlasche 126, gegebenenfalls unter Verwendung eines Werkzeugs, im Verlauf, insbesondere in der Endphase, der Schwenkbewegung in ihre wirksame Position gemäß Fig.11 zu bringen und/oder den freien Rand 136 in den beispielsweise durch die beiden Rastvorsprünge 140 gebildeten Sitz einrasten zu lassen.

Es ist aber auch möglich, alternativ oder ggf. auch zusätzlich die Ausnehmung 118 bis zur oberen Stirnfläche 160 des zweiten Teiles 112 zu führen, um so die Ausnehmung 118 von dieser oberen Stirnfläche 160 zugänglich zu machen.

## Patentansprüche

1. Verbindungsanordnung an zwei miteinander zu verbindenden Teilen (10, 12; 110, 112) , von denen das erste Teil (10, 110) an einem dem zweiten Teil (12, 112) zugekehrten Bereich mit einem Fortsatz (14; 114) und das zweite Teil an einem dem ersten Teil zugekehrten Bereich mit einer Ausnehmung (18; 118) versehen ist, in welche in der Verbindungsposition beider Teile der Fortsatz des ersten Teiles eingreift, wobei der Fortsatz mit einer Öffnung (20; 120) versehen ist, und in der Ausnehmung im zweiten Teil ein Vorsprung (22; 122) vorhanden ist, der in der Verbindungsposition beider Teile in die Öffnung am Fortsatz des ersten Teiles eingreift, dadurch gekennzeichnet, daß im Bereich der Öffnung (20; 120) des Fortsatzes (14; 114) am ersten Teil (10; 110) eine Arretierlasche (26; 126) angeordnet ist derart, daß sie durch den Vorsprung (22; 122) in eine Position verschwenkt wird, in welcher sie sich an einem dem Vorsprung (22; 122) gegenüberliegenden Bereich (38; 138) der Begrenzungswandung der Ausnehmung (18; 118) im zweiten Teil abstützt und beide Teile (10, 12; 110, 112) in der Verbindungsposition sichert.

2. Verbindungsanordnung nach Anspruch 1, dadurch gekennzeichnet, daß die Arretierlasche (26; 126) an einem Bereich (24; 124) der Öffnung (20; 120) angebracht ist.

3. Verbindungsanordnung nach Anspruch 1, dadurch gekennzeichnet, daß die Arretierlasche (26; 126) in ihrer verschwenkten, die Verbindung beider Teile (10, 12; 110, 112) sichernden Position im wesentlichen senkrecht zur Richtung (28; 128) verläuft, in welcher sie in die Ausnehmung (18; 118) hineinbewegt worden war.

4. Verbindungsanordnung nach Anspruch 1, dadurch gekennzeichnet, daß die Arretierlasche (26; 126) in ihrer verschwenkten, die Verbindungsposition der beiden Teile (10, 12; 110, 112) sichernden Position im wesentlichen senkrecht zur Hauptebene des Fortsatzes (14; 114) am ersten Teil (10; 110) verläuft.

5. Verbindungsanordnung nach Anspruch 1, dadurch gekennzeichnet, daß das den Fortsatz (14; 114) aufweisende erste Teil (10; 110) zur Herstellung einer formschlüssigen Verbindung mit dem die Ausnehmung (18; 118) aufweisenden zweiten Teil (12; 112) gegenüber letzterem in Richtung auf den Vorsprung (22; 122) der Ausnehmung (18; 118) verschiebbar ist, wodurch die Arretierlasche (26; 126) durch den Vorsprung in Richtung auf ihre die Verbindung zwischen beiden Teilen (10, 12; 110, 112) sichernde Position verschwenkt wird.

6. Verbindungsanordnung nach Anspruch 1, dadurch gekennzeichnet, daß das die Ausnehmung (18; 118) aufweisende zweite Teil (12; 112) mit einem Sitz (40, 140) versehen ist, in welchen das freie Ende (36; 136) der Arretierlasche (26; 126) in ihrer die Verbindung zwischen beiden Teilen sichernden Position verschwenkt wird.

7. Verbindungsanordnung nach Anspruch 1, dadurch gekennzeichnet, daß wenigstens die am Fortsatz angebrachte Arretierlasche (26; 126) aus vorzugsweise thermoplastischem Kunststoff bestehen.

8. Verbindungsanordnung nach Anspruch 1, dadurch gekennzeichnet, daß die beiden Teile (10, 12) in der Verbindungsposition im wesentlichen rechteckig zueinander verlaufend angeordnet sind.

9. Verbindungsanordnung nach Anspruch 1, dadurch gekennzeichnet, daß die beiden Teile (110, 112) in der Verbindungsposition im wesentlichen linear verlaufend angeordnet sind.

10. Verbindungsanordnung nach Anspruch 1, dadurch gekennzeichnet, daß der Fortsatz (14) des ersten Teiles (10) in der Verbindungsposition beider Teile (10, 12) im wesentlichen senkrecht zur Hauptebene des zweiten Teiles (12) verläuft.

11. Verbindungsanordnung nach Anspruch 1, dadurch gekennzeichnet, daß der Fortsatz (114) des ersten Teiles (110) in der Verbindungsposition beider Teile (110, 112) im wesentlichen parallel zur Hauptebene des zweiten Teiles (112) verläuft.

12. Verbindungsanordnung nach Anspruch 1, dadurch gekennzeichnet, daß der Fortsatz (14) des ersten Teiles (10; 110) im wesentlichen parallel zur Hauptebene des ersten Teiles verläuft.

13. Verbindunganordnung nach Anspruch 1, dadurch gekennzeichnet, daß in der Verbindungsposition beider Teile (10, 12; 110, 112) der Vorsprung (22; 122) in der Ausnehmung (18; 118) des zweiten Teiles die Öffnung (20; 120) im Fortsatz (14; 114) des ersten Teiles (10; 110) durchgreift und mit einer (30) seiner Begrenzungsflächen an der Arretierlasche (26; 126) anliegt, wenn diese ihre Verbindung zwischen beiden Teilen sichernde Position einnimmt.

14. Verbindungsanordnung nach Anspruch 13, dadurch gekennzeichnet, daß der in der Öffnung (20; 120) des zweiten Teiles (12; 112) angeordnete Vorsprung (22; 122) eine Begrenzungsfläche (30; 130) aufweist, die im wesentlichen parallel zu einer dem Vorsprung zugekehrten Begrenzungsfläche der Arretierlasche (26; 126) in ihrer die Verbindung sichernde Position verläuft.

15. Verbindungsanordnung nach Anspruch 1, dadurch gekennzeichnet, daß der der Öffnung im zweiten Teil zugeordnete Vorsprung im Querschnitt etwa keilförmig ausgebildet ist.

## Claims

1. A connecting arrangement on two parts (10, 12; 110, 112) which are to be connected together, of which the first part (10, 110) is provided with an extension (14; 114) at a region which is towards the second part (12, 112) and the second part is provided at a region which is towards the first part with an opening (18; 118) into which the extension of the first part engages in the connected position of the two parts, wherein the extension is provided with an aperture (20; 120) and disposed in the opening in the second part is a projection (22; 122) which engages into the aperture on the extension of the first part in the connected position of the two parts, characterised in that an arresting tongue (26; 126) is arranged on the first part (10; 110) in the region of the aperture (20; 120) in the extension (14; 114) in such a way that the arresting tongue is pivoted by the projection (22; 122) into a position in which it bears against a region (38; 138), which is opposite the projection (22; 122), of the boundary wall of the opening (18; 118) in the second part and secures the two parts (10, 12; 110, 112) in the connected position.

2. A connecting arrangement according to claim 1 characterised in that the arresting tongue (26; 126) is disposed on a region (24; 124) of the aperture (20; 120).

3. A connecting arrangement according to claim 1 characterised in that in its pivoted position of securing the connection between the two parts (10, 12; 110, 112) the arresting tongue (26; 126) extends substantially perpendicularly to the direction in which it had been moved into the opening (18; 118).

4. A connecting arrangement according to claim 1 characterised in that in its pivoted position of securing the connecting position of the two parts (10, 12; 110, 112) the arresting tongue extends substantially perpendicularly to the main plane of the extension (14; 114) on the first part (10; 110).

5. A connecting arrangement according to claim 1 characterised in that the first part (10; 110) which has the extension (14; 114), for making a positively locking connection with the second part (12; 112) having the opening (18; 118), is displaceable relative to the second part in a direction towards the projection (22; 122) of the opening (18; 118), whereby the arresting tongue (26; 126) is pivoted by the projection in a direction towards its position of securing the connection between the two parts (10, 12; 110, 112).

6. A connecting arrangement according to claim 1 characterised in that the second part (12; 112) having the opening (18; 118) is provided with a seat (40, 140) into which the free end (36; 136) of the arresting tongue (26; 126) is pivoted in its position of securing the connection between the two parts.

7. A connecting arrangement according to claim 1 characterised in that at least the arresting tongue (26; 126) on the extension comprises preferably thermoplastic material.

8. A connecting arrangement according to claim 1 characterised in that the two parts (10, 12) are arranged to extend substantially at right-angled relationship with each other in the connecting position.

9. A connecting arrangement according to claim 1 characterised in that the two parts (110, 112) are arranged to extend substantially linearly in the connecting position.

10. A connecting arrangement according to claim 1 characterised in that the extension (14) of the first part (10) extends substantially perpendicularly to the main plane of the second part (12) in the connecting position of the two parts (10, 12).

11. A connecting arrangement according to claim 1 characterised in that the extension (114) of the first part (110) extends substantially perpendicularly to the main plane of the second part (112) in the connecting position of the two parts (110, 112).

12. A connecting arrangement according to claim 1 characterised in that the extension (14) of the first part (10; 110) extends substantially parallel to the main plane of the first part.

13. A connecting arrangement according to claim 1 characterised in that in the connecting position of the two parts (10, 12; 110, 112) the projection (22; 122) in the opening (18; 118) of the second part engages through the aperture (20; 120) in the extension (14; 114) of the first part (10; 110) and bears with one (30) of its boundary surfaces against the arresting tongue (26; 126) when the tongue occupies its position of securing the connection between the two parts.

14. A connecting arrangement according to claim 13 characterised in that the projection (22; 122) disposed in the aperture (20; 120) of the second part (12; 112) has a boundary surface (30; 130) which in the position of the arresting tongue (26; 126) in which it secures the connection extends substantially parallel to a boundary surface of the arresting tongue (26; 126), which is towards the projection.

15. A connecting arrangement according to claim 1 characterised in that the projection associated with the aperture in the second part is of a substantially wedge-shaped configuration in cross-section.

## Revendications

1. Système d'assemblage pour réunir deux pièces ou parties (10,12; 110,112), dont la première (10; 110) porte un appendice (14; 114) dirigé vers la deuxième partie (12; 112), celle-ci étant pourvue d'une échancrure (18; 118) adaptée à recevoir l'appendice de la première partie assemblée avec la deuxième partie, l'appendice (14; 114) de la première partie présentant une ouverture de passage (20; 120) où peut s'engager en position d'assemblage un bossage (22; 122) disposé en saillie dans l'échancrure (18; 118) de la deuxième partie, le système d'assemblage étant *caractérisé en ce que* la première partie (10; 110), dans la zone de l'ouverture (20; 120) de son appendice (14; 114) est pourvue d'une languette de verrouillage (26; 126), disposée de manière à venir porter contre le bossage en saillie (22; 122) au cours de l'opération d'assemblage, pour être ainsi obligée de se rabattre en position de retenue, en appui contre la paroi (38; 138) qui borde l'échancrure (18; 118) de la deuxième partie (12; 112), à l'opposé du bossage en saillie(22; 122), afin de verrouiller l'assemblage des deux parties (10,12; 110,112).

2. Système d'assemblage selon la revendication 1, *caractérisé en ce* que la languette de verrouillage (26; 126) est portée par une bordure (24; 124) de l'ouverture (20; 120).

3. Système d'assemblage selon la revendication 1, *caractérisé en ce* que la languette de verrouillage (26; 126), rabattue en position de retenue pour verrouiller l'assemblage des deux parties (10,12; 110,112), est orientée dans une direction sensiblement perpendiculaire à la direction (28; 128) de son enfoncement préalable dans l'échancrure (18; 118).

4. Système d'assemblage selon la revendication 1, *caractérisé en ce que*, rabattue dans sa position de retenue où elle verrouille l'assemblage des deux parties (10,12; 110,112), la languette de verrouillage (26; 126) est sensiblement perpendiculaire au plan principal de l'appendice (14; 114) de la première partie (10; 110).

5. système d'assemblage selon la revendication 1, *caractérisé en ce que* la première partie (10; 110) qui porte l'appendice (14; 114) de forme approprié pour réaliser un assemblage verrouillé avec la deuxième partie (12; 112), pourvue à cet effet de l'échancrure (18; 118), est mobile en translation par rapport à cette deuxième partie, en direction du bossage (22; 122) en saillie dans l'échancrure (18; 118), ce mouvement assurant le rabattement de la languette de verrouillage (26; 126) par le bossage en saillie (22; 122) qui pousse la languette vers sa position de retenue où elle verrouille l'assemblage des deux parties (10,12; 110,112).

6. Système d'assemblage selon la revendication 1, *caractérisé en ce* que la deuxième partie (12; 112) qui est pourvue de l'échancrure (18; 118) présente dans celle-ci un logement de retenue (40; 140), adapté à recevoir l'extrémité libre (36; 136) de la languette de verrouillage (26; 126) en position rabattue, qui bloque ainsi l'assemblage des deux parties (10,12; 110,112).

7. Système d'assemblage selon la revendication 1, *caractérisé en ce qu'au* moins la languette de verrouillage (26; 126) portée par l'appendice (14; 114) est confectionnée de préférence en matière thermoplastique.

8. Système d'assemblage selon la revendication 1, *caractérisé en ce que* les deux parties (10, 12) en position d'assemblage sont sensiblement perpendiculaires l'une par rapport à l'autre.

9. Système d'assemblage selon la revendication 1, *caractérisé en ce* que les deux parties (110, 112) en position d'assemblage sont sensiblement alignées dans le prolongement l'une de l'autre.

10. Système d'assemblage selon la revendication 1, *caractérisé en ce que* l'appendice (14) de la première partie (10) est sensiblement perpendiculaire au plan principal de la deuxième partie (12), lorsque les deux parties (10, 12) sont en position d'assemblage.

11. Système d'assemblage selon la revendication 1, *caractérisé en ce que* l'appendice (114) de la première partie (110) est sensiblement parallèle au plan principal de la deuxième partie (112), lorsque les deux parties (110, 112) sont en position d'assemblage.

12. Système d'assemblage selon la revendication 1, *caractérisé en ce que* l'appendice (14; 114) de la première partie (10; 110) est sensiblement parallèle au plan principal de cette première partie.

13. Système d'assemblage selon la revendication 1, *caractérisé en ce que*, dans la position d'assemblage des deux parties (10,12; 110,112), le bossage (22; 122) en saillie dans l'échancrure (18; 118) de la deuxième partie est en prise dans l'ouverture de passage (20; 120) ménagée dans l'appendice (14; 114) de la première partie (10; 110), une face (30; 130) du bossage (22; 122) étant alors en appui sur la languette de verrouillage (26; 126), lorsque celle-ci est parvenue dans sa positon de retenue pour bloquer l'assemblage des deux parties.

14. Système d'assemblage selon la revendication 13, *caractérisé en ce que* le bossage (22; 122) en saillie dans l'ouverture (20; 120) de la deuxième partie (12; 112) présente une face (30; 130) qui est sensiblement parallèle à une face de la languette de verrouillage (26; 126) disposée en regard du bossage en saillie (22; 122), dans la position de retenue de la languette (26; 126) où celle-ci bloque l'assemblage des deux parties.

15. Système d'assemblage selon la revendication 1, *caractérisé en ce que* le bossage en saillie dans l'ouverture de la deuxième partie présente en coupe transversale un profil sensiblement en coin.
